# EUROPEAN PATENT APPLICATION

(11) **EP 4 535 264 A1**
(43) Date of publication of application: **09.04.2025**
(21) Application number: 24203819.8
(22) Date of filing: 01.10.2024
(51) Int. Cl.: G06Q 20/20, G07D 11/50, G07D 11/60, G07F 5/24, G07G 1/00, G07G 1/01

(54) **AUTOMATIC TRANSACTION APPARATUS**

(30) Priority: 02.10.2023 JP 2023171657
(71) Applicant: GLORY LTD., Himeji-shi Hyogo 670-8567 (JP); Aksor, 77400 Saint-Thibault des Vignes (FR)
(72) Inventor: TAKEUCHI, Masato, Hyogo, 670-8567 (JP); HAMADA, Takuro, Hyogo, 670-8567 (JP); YOSHIDA, Yusuke, Hyogo, 670-8567 (JP); MITSUSADA, Yoshikazu, Hyogo, 670-8567 (JP); CADETE, Diogo, 77400 Saint-Thibault-Des-Vignes (FR); NGUYEN, Nicolas, 77400 Saint-Thibault-Des-Vignes (FR)
(74) Representative: SSM Sandmair

(57) **Abstract**

An automatic transaction apparatus includes: a money handling assembly configured to handle money including banknotes and coins; a first display above the money handling assembly, the first display facing a first direction and the first display to display a first screen for input of a transaction instruction; a second display above the money handling assembly, the second display facing a second direction which is opposite the first direction, and the second display to display a second screen for input of a transaction instruction; and an operation device that faces the second direction, the operation device on which an operation for performing electronic settlement of a monetary amount corresponding to a transaction input to the second display is performed.

## Description

### CROSS REFERENCE TO RELATED APPLICATION

This application claims priority under 35 U.S.C. Section 119 of Japanese Patent Application No. 2023-171657 filed October 2, 2023, entitled "AUTOMATIC TRANSACTION APPARATUS". The disclosure of the above application is incorporated herein by reference.

### BACKGROUND OF THE INVENTION

### FIELD OF THE INVENTION

The present invention relates to an automatic transaction apparatus that receives input of instructions for transactions and settles monetary amounts corresponding to the transactions.

### DESCRIPTION OF RELATED ART

To date, automatic transaction apparatuses that receive orders of transaction targets such as commodities and services and settle the prices (payments) of the ordered transaction targets, have been installed in facilities such as restaurants and train stations. For example, Japanese Laid-Open Patent Publication No. 2008-203993 describes a vending machine as an example of this type of automatic transaction apparatus. This vending machine is, for example, a ticket issuing machine installed in a train station, receives an order of a train ticket, and settles the corresponding fare (train fare) in cash. For this, the ticket issuing machine includes a display operation device for receiving an operation for ordering (operation for issuing) a train ticket, a depositing storage unit for separately storing banknotes and coins inserted as a train fare, and a dispensing storage unit for separately storing change banknotes and change coins.

The automatic transaction apparatus can be configured to enable electronic settlement (cashless settlement) in addition to cash settlement. In this case, the automatic transaction apparatus is provided with a settlement terminal that reads information necessary for electronic settlement.

The automatic transaction apparatus is often installed close to a wall in a facility such that the back side thereof is close to a wall surface. Meanwhile, it is conceivable that the automatic transaction apparatus is configured to enable orders and settlements for transaction targets on both the front and back sides thereof and is installed in a facility so as to be separated from a wall surface. This allows two users to use the automatic transaction apparatus at the same time.

However, if the space required to install such an automatic transaction apparatus that can be used on both sides thereof is not significantly different from the space required to install two automatic transaction apparatuses, then it is likely that the realization of an automatic transaction apparatus that can be used on both sides thereof will be meaningless.

In the total size of an automatic transaction apparatus, a display for inputting instructions for transactions and a settlement terminal for performing electronic settlement account for a small proportion, and a money handling assembly that is provided for cash settlement and handles money including banknotes and coins accounts for a large proportion. In addition, in recent years, cashless transactions have been increasing, and while the use of electronic settlement (cashless settlement) is increasing, the use of cash settlement is decreasing.

### SUMMARY OF THE INVENTION

A main aspect of the present invention is directed to an automatic transaction apparatus. The automatic transaction apparatus according to this aspect includes: a money handling assembly including banknotes and coins; a first display above the money handling assembly, the first display facing a first direction and the first display to display a first screen for input of a transaction instruction; a second display above the money handling assembly, the second display facing a second direction which is opposite the first direction, and the second display to display a second screen for input of a transaction instruction; and an operation device that faces the second direction, the operation device on which an operation for performing electronic settlement of a monetary amount corresponding to a transaction input to the second display is performed. The automatic transaction apparatus further including a housing. In this case, the money handling assembly is provided within the housing. The housing includes a first surface facing the first direction. The first surface has a banknote inlet portion into which banknotes are inserted, a banknote outlet portion to which banknotes are discharged, a coin inlet portion into which coins are inserted, and a coin outlet portion to which coins are discharged. The first display is provided above the first surface.

For example, the money handling assembly may count an amount of money inserted into at least one of the banknote inlet portion and the coin inlet portion, and may discharge money to at least one of the banknote outlet portion and the coin outlet portion when there is a difference between the amount of the inserted money and a monetary amount corresponding to a transaction input to the first display.

In the automatic transaction apparatus according to this aspect, on the side having the first surface and the first display, input of a transaction instruction and cash settlement of a monetary amount corresponding to the instructed transaction can be performed, and on the side having the second display and the operation device, input of a transaction instruction and electronic settlement of a monetary amount corresponding to the instructed transaction can be performed. Therefore, with the single automatic transaction apparatus, two users can simultaneously perform transactions.

Furthermore, since there is only one money handling assembly, the installation space can be significantly reduced compared to the case where two automatic transaction apparatuses each having a money handling assembly are installed back-to-back.

The automatic transaction apparatus according to this aspect may further include: a first control circuit configured to control the first display; and a second control circuit configured to control the money handling assembly. In this case, the first control circuit may control the first display to display the first screen, and may notify the second control circuit of an instruction of cash handling corresponding to an instructed transaction, in accordance with input to the first display. Furthermore, the second control circuit may control the money handling assembly to count the amount of money inserted into at least one of the banknote inlet portion and the coin inlet portion, and to perform a process of discharging money to at least one of the banknote outlet portion and the coin outlet portion, when there is the difference between the amount of the inserted money and a monetary amount corresponding to a transaction input to the first display.

With the above configuration, on the side having the first surface and the first display of the automatic transaction apparatus, the user can perform cash settlement of a monetary amount corresponding to an instructed transaction.

In the case of the above configuration, further, when cash settlement is instructed by input to the first display, the first control circuit may notify the second control circuit of the instruction of cash handling, in accordance with the transaction input to the first display, and the second control circuit may control the money handling assembly to execute the notified cash handling.

With the above configuration, the user can perform cash settlement with the automatic transaction apparatus by giving an instruction of cash settlement using the first display.

In the case where the first control circuit and the second control circuit are included as described above, a third control circuit configured to control the second display and the operation device may be further included. In this case, the third control circuit controls the second display to display the second screen, and when an instruction of a transaction is received via the second display, executes a process of performing electronic settlement of a monetary amount corresponding to the transaction, based on an operation on the operation device.

With the above configuration, on the side having the second display of the automatic transaction apparatus, the user can perform electronic settlement of a monetary amount corresponding to an instructed transaction.

In the case where the first control circuit and the second control circuit are included as described above, another operation device that faces the first direction and on which an operation for performing electronic settlement of a monetary amount corresponding to a transaction input to the first display is performed, may be further included. In this case, when electronic settlement is instructed by input to the first display, the first control circuit may execute a process of performing electronic settlement of a monetary amount corresponding to the inputted transaction, based on an operation on the another operation device.

On the side having the first surface and the first display of the automatic transaction apparatus, the user can perform not only cash settlement but also electronic settlement for monetary amounts corresponding to instructed transactions.

In the automatic transaction apparatus according to this aspect, the housing may include a first housing including the first surface and in which the money handling assembly is provided, a second housing including a second surface in which the first display is provided, and a third housing including a third surface in which the second display is provided. In this case, a size of the second housing in a direction orthogonal to the second surface and a size of the third housing in a direction orthogonal to the third surface may be smaller than a size of the first housing in a direction orthogonal to the first surface. Furthermore, the third housing may be positioned on the first housing and is aligned with the second housing.

With the above configuration, it becomes easier to place and align the second housing and the third housing on the first housing.

In the case of the above configuration, the size of the second housing in the direction orthogonal to the second surface and the size of the third housing in the direction orthogonal to the third surface may be equal to or smaller than half the size of the first housing in the direction orthogonal to the first surface.

With the above configuration, it becomes even easier to place and align the second housing and the third housing on the first housing.

In the case of the above configuration, further, the second housing may be positioned on the first housing such that the second surface is flush with the first surface of the first housing.

In the invention according to claim 10, the term "flush" includes the concept of "substantially flush".

With the above configuration, a large space for placing the third housing on the upper surface of the first housing can be ensured. Therefore, it becomes easier to place and align the third housing with the second housing on the first housing. In addition, it becomes less likely that the third housing will protrude from the first housing.

In the case of the above configuration, further, the first housing may include a fourth surface that faces a direction opposite to the first surface. In this case, the third housing may be positioned on the first housing such that the third surface is flush with the fourth surface.

In the invention according to claim 11, the term "flush" includes the concept of "substantially flush".

With the above configuration, a large space for placing the second housing on the upper surface of the first housing can be ensured. Therefore, it becomes easier to place and align the second housing with the third housing on the first housing. In addition, it becomes less likely that the second housing will protrude from the first housing.

In the automatic transaction apparatus according to this aspect, the first display may be provided in the second surface of the housing, and another operation device on which an operation for performing electronic settlement of a monetary amount corresponding to a transaction input to the first display is performed may be provided below the first display in the second surface. In this case, in a right-left direction of the automatic transaction apparatus, which is perpendicular to the first direction, the banknote inlet portion and the coin inlet portion are aligned. In addition, the banknote inlet portion may have a cavity shape and may include a banknote inlet that is open in the first surface. Furthermore, the coin inlet portion may have a cavity shape and may include a coin inlet that is open in the first surface. In an up-down direction of the automatic transaction apparatus, which is perpendicular to the right-left direction and perpendicular to the first direction, the coin inlet may be larger than the banknote inlet and the coin inlet may extend upward more than the banknote inlet. The another operation device may overlap the banknote inlet portion in the up-down direction, and the another operation device may overlap the coin inlet portion in the right-left direction.

With the above configuration, the coin inlet is wider in the up-down direction than the banknote inlet, so that it becomes easier for the user to insert coins into the coin inlet portion through the coin inlet. Meanwhile, the banknote inlet is narrower in the up-down direction than the coin inlet and thus has no unnecessary space.

Furthermore, since the another operation device is placed in the second surface so as to overlap the banknote inlet portion in the up-down direction and overlap the coin inlet portion, which extends upward more than the banknote inlet portion, in the right-left direction, a region composed of the another operation device, the banknote inlet portion, and the coin inlet portion can be made compact in the up-down direction and the right-left direction. Therefore, the apparatus can be made compact.

In the automatic transaction apparatus according to this aspect, the banknote inlet portion and the coin inlet portion overlap and the banknote outlet portion and the coin outlet portion overlap in a right-left direction of the automatic transaction apparatus, which is perpendicular to the first direction. Further, the banknote inlet portion and the banknote outlet portion overlap and the coin inlet portion and the coin outlet portion overlap in an up-down direction of the automatic transaction apparatus, which is perpendicular to the right-left direction and perpendicular to the first direction.

With the above configuration, the banknote inlet portion and the coin inlet portion are arranged side by side at the same height position, so that it is easier for a user to recognize that these inlet portions are the same inlet portion. Therefore, it becomes easier for the user to smoothly insert banknotes and coins into the banknote inlet portion and the coin inlet portion.

In addition, since the banknote outlet portion and the coin outlet portion are arranged side by side at the same height position, it is easier for the user to recognize that these outlet units are the same outlet portion. Therefore, it becomes easier for the user to smoothly take out banknotes and coins from the banknote outlet portion and the coin outlet portion.

Furthermore, since the height positions of the banknote inlet portion and the coin inlet portion are the same, the height positions of the banknote outlet portion and the coin outlet portion are the same, and the positions of the banknote inlet portion and the banknote outlet portion coincide and the positions of the coin inlet portion and the coin outlet portion coincide in the right-left direction of the first surface, the banknote inlet portion, the banknote outlet portion, the coin inlet portion, and the coin outlet portion are easily gathered together. Therefore, it becomes easier for the user to perform a series of operations from insertion to taking-out of banknotes and coins. Furthermore, since the banknote inlet portion, the banknote outlet portion, the coin inlet portion, and the coin outlet portion are gathered together, the apparatus can be easily made compact.

In the automatic transaction apparatus according to this aspect, the banknote inlet portion may have a cavity shape and may include a banknote inlet that is open in the first surface. In addition, the coin inlet portion may have a cavity shape, may include a coin inlet that is open in the first surface, and may include a coin reception portion that receives a plurality of coins, at a bottom portion thereof. Furthermore, in the up-down direction of the automatic transaction apparatus,which is perpendicular to the first direction, the coin inlet may be larger than the banknote inlet.

With the above configuration, since the coin inlet is wider in the up-down direction than the banknote inlet, it becomes easier for the user to insert coins into the coin reception portion through the coin inlet. Meanwhile, the banknote inlet is narrower in the up-down direction than the coin inlet and thus has no unnecessary space.

In the automatic transaction apparatus according to this aspect, the coin inlet portion may be have a cavity shape, may include a coin inlet that is open in the first surface, and may include a coin reception portion that receives a plurality of coins, at a bottom portion thereof. In this case, in an interior of the coin reception portion, a taking-in port for taking coins into the money handling assembly may be provided at an end portion opposite to the coin inlet side, and a passage that has a sloping bottom surface sloping downward toward the taking-in port side and in which coins flow toward the taking-in port may be provided. The passage may include a first passage that has an entrance width wider than a width of the taking-in port and has a width gradually narrowing toward the taking-in port side, and a second passage that extends from an exit of the first passage to the taking-in port.

With the above configuration, if a coin jam occurs in the coin reception portion, the jam occurs at the exit of the first passage, which is located frontward of the taking-in port, and a state where coins are accumulated in the first passage occurs. Therefore, the user can easily visually recognize that the coin jam has occurred in the coin reception portion, through the coin inlet.

In the automatic transaction apparatus according to this aspect, the money handling assembly may include a banknote handling assembly configured to handle banknotes and the coin handling assembly configured to handle coins. In this case, a power supply assembly configured to supply power to both the banknote handling assembly and the coin handling assembly may be provided within the housing.

With the above configuration, both the banknote handling assembly and the coin handling assembly can be driven by power supplied from one power supply assembly.

In the case of the above configuration, further, a first power supply unit configured to supply power to the first display, a second power supply unit configured to supply power to the second display, and a power strip to which a plug of a power cord extending from the power supply assembly, a plug of a power cord extending from the first power supply unit, and a plug of a power cord extending from the second power supply unit are connected may be provided within the housing, and a power cord of the power strip may extend from the inside of the housing to the outside.

With the above configuration, by connecting the plug of the power cord of the power strip to a commercial power supply outlet, power from a commercial power supply can be supplied to the power supply assembly, the first power supply unit, and the second power supply unit via the power strip.

The automatic transaction apparatus according to this aspect may further include another operation device on which an operation for performing electronic settlement of a monetary amount corresponding to a transaction input to the first display is performed. In this case, the banknote inlet portion and the coin inlet portion may be aligned in the right-left direction in the first surface. In addition, the banknote outlet portion and the coin outlet portion may be aligned in the right-left direction below the banknote inlet portion and the coin inlet portion in the first surface. Furthermore, the another operation device may be provided below the first display in the second surface.

With the above configuration, since the first display used to input a transaction instruction, the another operation device, the banknote inlet portion, and the coin inlet portion which are used to settle a monetary amount corresponding to the transaction, and the banknote outlet portion and the coin outlet portion which are used to receive change are placed in order from the top of the housing, the user can perform input of a transaction instruction, settlement, payment of a price, and reception of change in a single flow, from the top to the bottom of the apparatus. Therefore, the user can smoothly perform operations from input of an instruction for a transaction to reception of change, which improves the usability of the apparatus.

The effects and the significance of the present invention will be further clarified by the description of the embodiment below. However, the embodiment below is merely an example for implementing the present invention. The present invention is not limited to the description of the embodiment below in any way.

### BRIEF DESCRIPTION OF THE DRAWINGS

FIG. 1A is a front perspective view of an automatic transaction apparatus according to an embodiment;
FIG. 1B is a front perspective view of the automatic transaction apparatus in a state where a money handling block is pulled out from the inside of a housing, according to the embodiment;
FIG. 2 is a back perspective view of the automatic transaction apparatus according to the embodiment;
FIG. 3A is a front view of the automatic transaction apparatus according to the embodiment;
FIG. 3B is a side view showing the internal configuration of the automatic transaction apparatus with the housing depicted in cross-section, according to the embodiment;
FIG. 4A is a front perspective view of the money handling block according to the embodiment;
FIG. 4B is a back perspective view of the money handling block according to the embodiment;
FIG. 5A shows a schematic configuration of a banknote handling assembly according to the embodiment;
FIG. 5B shows a schematic configuration of a coin handling assembly according to the embodiment;
FIGS. 6A and 6B are respectively a perspective view and a longitudinal cross-sectional view of a banknote inlet member having a banknote inlet portion according to the embodiment;
FIG. 7 is a perspective view of a coin inlet member having a coin inlet portion and components therearound according to the embodiment;
FIGS. 8A and 8B are respectively a longitudinal cross-sectional view and a transverse cross-sectional view of the coin inlet member having the coin inlet portion and the components therearound according to the embodiment;
FIGS. 9A to 9C are schematic diagrams illustrating a routing process of power cords in the automatic transaction apparatus according to the embodiment;
FIGS. 10A and 10B respectively illustrate a depositing process and a dispensing process of the banknote handling assembly according to the embodiment;
FIGS. 11A and 11B respectively illustrate a depositing process and a dispensing process of the coin handling assembly according to the embodiment;
FIG. 12 illustrates a dispensing preparation process of the coin handling assembly according to the embodiment;
FIG. 13 shows a state where coins are jammed in a coin reception portion of the coin inlet portion according to the embodiment;
FIG. 14A is a front perspective view of an automatic transaction apparatus according to a modification; and
FIG. 14B is a side view showing the internal configuration of the automatic transaction apparatus with a housing depicted in cross-section, according to the modification.

It should be noted that the drawings are solely for description and do not limit the scope of the present invention by any degree.

### DETAILED DESCRIPTION

Hereinafter, an embodiment of the present invention will be described with reference to the drawings.

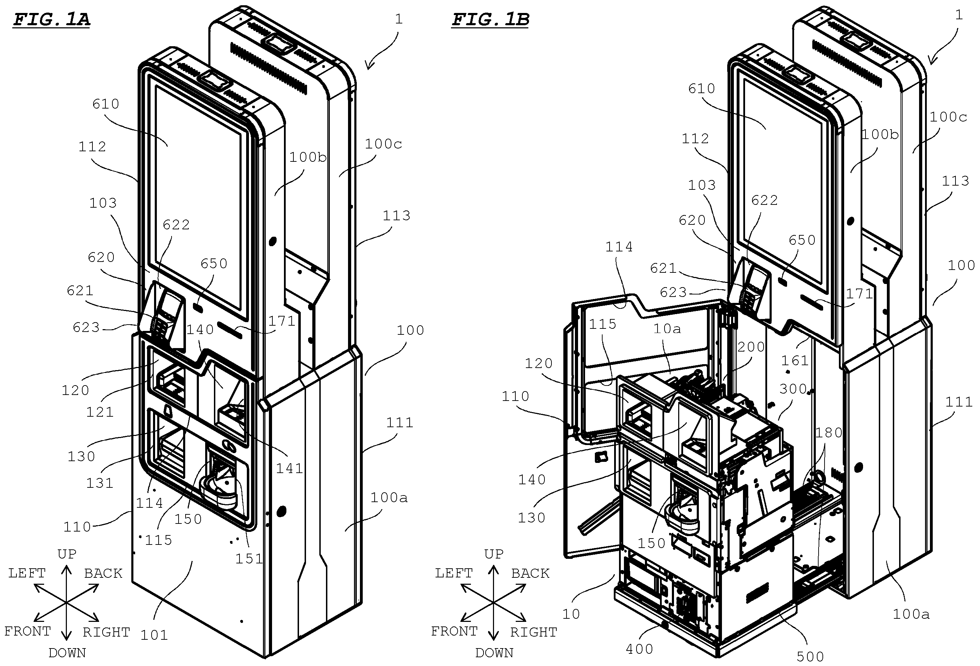

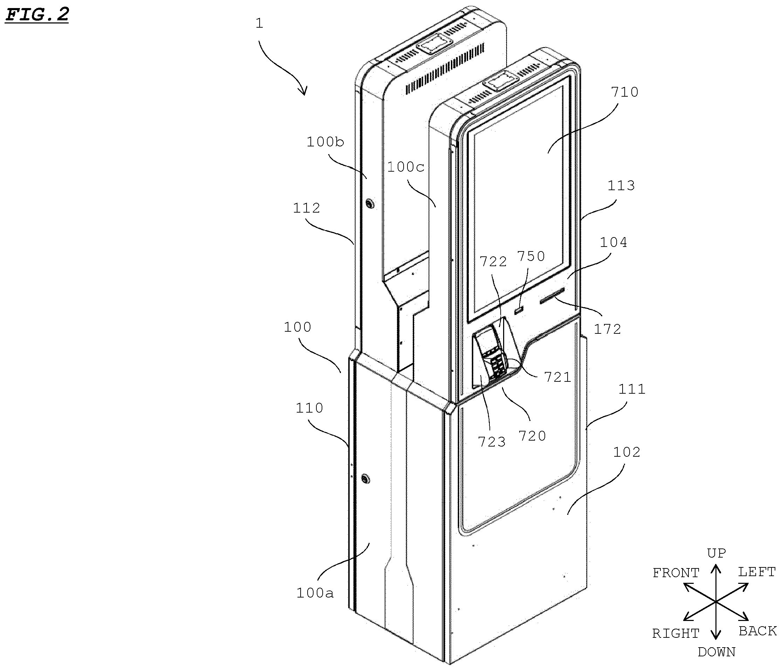

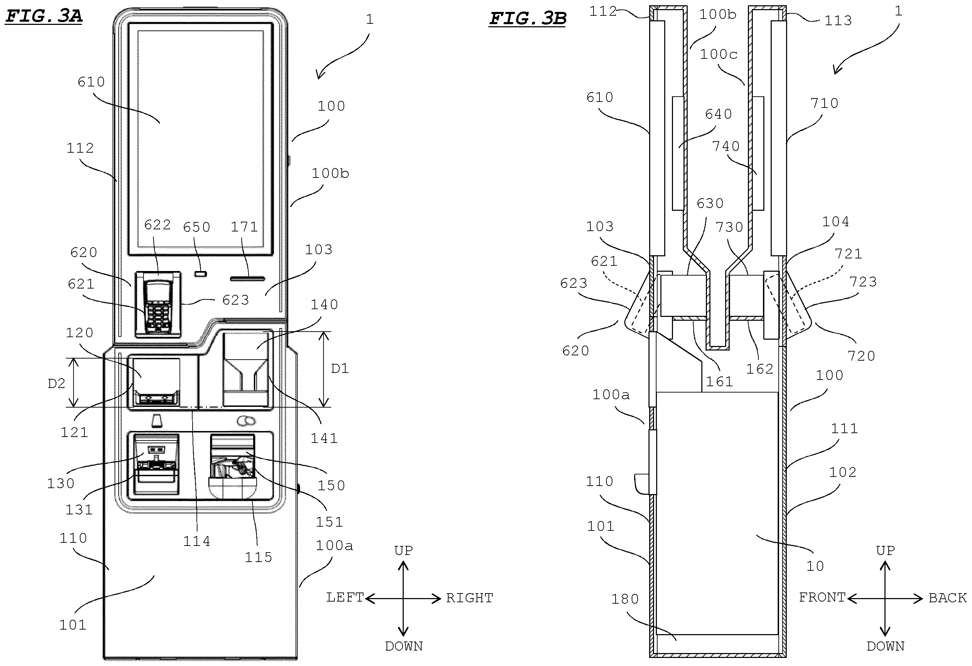

FIG. 1A is a front perspective view of an automatic transaction apparatus 1, and FIG. 1B is a front perspective view of the automatic transaction apparatus 1 in a state where a money handling block 10 is pulled out from the inside of a housing 100. FIG. 2 is a back perspective view of the automatic transaction apparatus 1. FIG. 3A is a front view of the automatic transaction apparatus 1, and FIG. 3B is a side view showing the internal configuration of the automatic transaction apparatus 1 with the housing 100 depicted in cross-section.

The automatic transaction apparatus 1 receives input of an instruction for a transaction and settles a monetary amount corresponding to the transaction. The automatic transaction apparatus 1 is installed in a store for sale of commodities, provision of services, or the like. Instructions for transactions are, for example, instructions for ordering commodities such as food and drink to be purchased by users, or services to be received by users.

The automatic transaction apparatus 1 includes the housing 100 that forms an outer shell. The housing 100 has a configuration in which a first housing 100a, a second housing 100b, and a third housing 100c are integrally formed. The second housing 100b and the third housing 100c are placed on the first housing 100a so as to be aligned in the front-back direction.

The first housing 100a has a substantially rectangular parallelepiped shape in which a dimension in a depth direction (front-back direction) is smaller than a dimension in a width direction (right-left direction). The second housing 100b and the third housing 100c each have a substantially rectangular parallelepiped shape in which a dimension in the depth direction (front-back direction) is smaller than a dimension in the width direction (right-left direction) and which is flat in the depth direction. Lower portions of the second housing 100b and the third housing 100c protrude backward more than upper portions thereof. The depth dimensions of the second housing 100b and the third housing 100c are smaller than half the depth dimension of the first housing 100a. The depth dimensions of the second housing 100b and the third housing 100c are preferably equal to or smaller than half the depth dimension of the first housing 100a, and are smaller than half the depth dimension of the first housing 100a in the present embodiment.

The second housing 100b and the third housing 100c have the same shape and face in opposite directions. The front surface of the second housing 100b faces the same side as the front surface of the first housing 100a, and the front surface of the third housing 100c faces the same side as the back surface (the side opposite to the front surface) of the first housing 100a.

The first housing 100a has a first front panel 110 and a first back panel 111 that can be opened and closed. The front surface of the first housing 100a, that is, the front surface of the first front panel 110, is a first operation surface 101 that is a first surface in the first housing 100a. On the first operation surface 101, insertion operations and take-out operations for banknotes and coins are performed. The back surface of the first housing 100a, that is, the surface of the first back panel 111, is an opposite-facing surface 102 that faces opposite to the first operation surface 101 and is a fourth surface in the first housing 100a.

The second housing 100b includes a second panel 112 that can be opened and closed. The front surface of the second housing 100b, that is, the surface of the second panel 112, is a second operation surface 103 that is a second surface in the second housing 100b. The second operation surface 103 is provided above the first operation surface 101 and faces in the same direction as the first operation surface 101 (frontward). On the second operation surface 103, order operations for transaction targets are performed. The order operations for the transaction targets are operations for giving instructions for transactions. On the second operation surface 103, electronic settlement operations for the prices of the transaction targets may be performed. The electronic settlement operations for the prices of the transaction targets are electronic settlement operations for monetary amounts corresponding to the transactions.

The third housing 100c includes a third panel 113 that can be opened and closed. The front surface of the third housing 100c, that is, the front of the third panel 113, is a third operation surface 104 that is a third surface in the third housing 100c. The third operation surface 104 is provided above the first operation surface 101 and faces in a direction opposite to that of the first operation surface 101 and the second operation surface 103 (backward). On the third operation surface 104, order operations for transaction targets and electronic settlement operations for the prices of the transaction targets are performed.

The second housing 100b is placed on the first housing 100a such that the second operation surface 103 is flush (including substantially flush) with the first operation surface 101. In addition, the third housing 100c is placed on the first housing 100a such that the third operation surface 104 is flush (including substantially flush) with the opposite-facing surface 102. A predetermined gap is provided between the second housing 100b and the third housing 100c.

A banknote inlet portion 120, a banknote outlet portion 130, a coin inlet portion 140, and a coin outlet portion 150 are provided in the first operation surface 101 of the first housing 100a. Banknotes to be deposited into a banknote handling assembly 200 are inserted into the banknote inlet portion 120. Banknotes dispensed from the banknote handling assembly 200 are discharged to the banknote outlet portion 130. Coins to be deposited into a coin handling assembly 300 are inserted into the coin inlet portion 140. Coins dispensed from the coin handling assembly 300 are discharged to the coin outlet portion 150.

The banknote inlet portion 120 is formed in a cavity shape. In addition, the banknote inlet portion 120 has a banknote inlet 121 that has a substantially quadrangular shape and is open in the first operation surface 101. The coin inlet portion 140 is formed in a cavity shape. In addition, the coin inlet portion 140 has a coin inlet 141 that has a substantially quadrangular shape and is open in the first operation surface 101.

The banknote inlet portion 120 and the coin inlet portion 140 are aligned in the right-left direction and overlap when viewed in the right-left direction, in the first operation surface 101. The lower end of the banknote inlet 121 and the lower end of the coin inlet 141 are at the same position in the up-down direction, and the height position of the banknote inlet portion 120 and the height position of the coin inlet portion 140 are the same. The coin inlet 141 has a dimension D1 in the up-down direction larger than a dimension D2 in the up-down direction of the banknote inlet 121, and extends upward more than the banknote inlet 121.

The banknote outlet portion 130 is formed in a cavity shape. In addition, the banknote outlet portion 130 has a banknote outlet 131 that has a substantially quadrangular shape and is open in the first operation surface 101. The coin outlet portion 150 is formed in a cavity shape. In addition, the coin outlet portion 150 has a coin outlet 151 that has a substantially quadrangular shape and is open in the first operation surface 101.

The banknote outlet portion 130 and the coin outlet portion 150 are aligned in the right-left direction and overlap when viewed in the right-left direction, below the banknote inlet portion 120 and the coin inlet portion 140 in the first operation surface 101. The upper end of the banknote outlet 131 and the upper end of the coin outlet 151 are at the same position in the up-down direction.

The banknote inlet portion 120 and the banknote outlet portion 130 overlap when viewed in the up-down direction, in the first operation surface 101. The center in the right-left direction of the banknote inlet portion 120 coincides with the center in the right-left direction of the banknote outlet portion 130. The coin inlet portion 140 and the coin outlet portion 150 overlap when viewed in the up-down direction, in the first operation surface 101. The center in the right-left direction of the coin inlet portion 140 is slightly shifted rightward from the center in the right-left direction of the coin outlet portion 150.

On the second operation surface 103 of the second housing 100b, a first display 610 for inputting instructions for transactions is provided on the upper side, and a first operation device 620 that is another operation device, on which operations for performing electronic settlement of monetary amounts corresponding to transactions are performed is provided on the lower side, that is, below the first display 610. The first display 610 faces the same side as the first operation surface 101.

The first display 610 has a quadrangular shape that is long in the up-down direction. The first display 610 is a touch panel-type operation/display unit, displays a first screen for ordering transaction targets, and receives operations for orders by touch on the first screen. The operations for orders include operations for selecting transaction targets to be ordered and operations for selecting settlement methods (electronic settlement, cash settlement) for the prices of the ordered transaction targets. That is, the screen displayed on the first display 610 includes a display (buttons, icons, etc.) for selecting a settlement method.

The first operation device 620 includes a settlement terminal 621, a substantially quadrangular installation surface 622 that is recessed from the second operation surface 103, and a frame 623 that projects from the second operation surface 103 and surrounds the settlement terminal 621 installed on the installation surface 622. On the first operation device 620, an operation for performing electronic settlement of the price of a transaction target ordered on the first screen of the first display 610 is performed.

The settlement terminal 621 receives operations for performing electronic settlement (cashless settlement) of prices. For electronic settlement, cards such as credit cards, debit cards, prepaid cards, and cards for electronic money settlement, and mobile terminals such as smartphones having electronic settlement apps installed therein, are used. Operations on the settlement terminal 621 include operations for reading information necessary for electronic settlement from a card or mobile terminal. The settlement terminal 621 is installed on the installation surface 622 so as to face obliquely upward in order to facilitate operations.

In the second operation surface 103, the first operation device 620 overlaps the banknote inlet portion 120 when viewed in the up-down direction, and overlaps the coin inlet portion 140 when viewed in the right-left direction. That is, when viewed in the right-left direction, a lower portion of the first operation device 620 overlaps a portion, of the coin inlet portion 140, extending upward more than the banknote inlet portion 120.

A first printer 630 and a first control assembly 640 that is a first control circuit are provided inside the second housing 100b. The first printer 630 is installed on an installation plate 161 provided within the second housing 100b. The first control assembly 640 is installed on the back surface of the second housing 100b.

The first printer 630 prints a receipt related to a transaction (order of a transaction target). A first discharge port 171 to which a receipt printed by the first printer 630 is discharged is placed in the second operation surface 103 and aligned with the first operation device 620 in the right-left direction so as to overlap the first operation device 620 when viewed in the right-left direction.

The first control assembly 640 includes a control board on which a control circuit is mounted, and controls the first display 610, the settlement terminal 621 of the first operation device 620, and the first printer 630.

Furthermore, a first human sensor 650 is provided between the first operation device 620 and the first discharge port 171 in the second operation surface 103. The first human sensor 650 is, for example, an infrared sensor, detects a person facing the front of the first operation surface 101 and the second operation surface 103, and transmits a detection signal to the first control assembly 640.

In the right-left direction of the first operation surface 101 and the second operation surface 103, the first operation device 620, the first discharge port 171, the banknote inlet portion 120, the banknote outlet portion 130, the coin inlet portion 140, and the coin outlet portion 150 are contained within the width in the right-left direction of the first display 610.

The first front panel 110, that is, the first operation surface 101, and the second panel 112, that is, the second operation surface 103, can be opened and closed separately. The boundary between the first operation surface 101 and the second operation surface 103 has a stepped shape in which the banknote inlet portion 120 side thereof is lower and the coin inlet portion 140 side thereof is higher.

A depositing opening 114 and a dispensing opening 115 are provided in the first operation surface 101. The banknote inlet portion 120 and the coin inlet portion 140 are provided within the depositing opening 114. The banknote outlet portion 130 and the coin outlet portion 150 are provided within the dispensing opening 115. The upper end of the depositing opening 114 has a stepped shape in which the banknote inlet portion 120 side thereof is lower and the coin inlet portion 140 side thereof is higher.

The first operation surface 101 and the second operation surface 103 are perpendicular to the bottom surface of the first housing 100a, and are perpendicular to a floor surface on which the automatic transaction apparatus 1 is installed. A configuration in which at least one of the first operation surface 101 and the second operation surface 103 is inclined with respect to the bottom surface of the first housing 100a and the floor surface, may be adopted.

On the third operation surface 104 of the third housing 100c, a second display 710 for inputting instructions for transactions is provided on the upper side, and a second operation device 720 that is an operation device, on which operations for performing electronic settlement of monetary amounts corresponding to transactions are performed is provided on the lower side, that is, below the second display 710. The second display 710 faces the side opposite to the first display 610, and the second operation device 720 faces the same side as the second display 710.

The second display 710 has the same configuration as the first display 610, displays a second screen for ordering transaction targets, and receives operations for orders by touch on the second screen. The operations for orders include operations for selecting transaction targets to be ordered but do not include operations for selecting cash settlement for the prices of the ordered transaction targets. That is, the screen displayed on the second display 710 does not include a display (buttons, icons, etc.) for selecting a cash settlement.

The second operation device 720 has the same configuration as the first operation device 620, and includes a settlement terminal 721, an installation surface 722, and a frame 723. On the second operation device 720, an operation for performing electronic settlement of the price of a transaction target ordered on the second screen of the second display 710 is performed.

A second printer 730 and a second control assembly 740 that is a third control circuit are provided inside the third housing 100c. The second printer 730 is installed on an installation plate 162 provided within the third housing 100c. The second control assembly 740 is placed on the back surface of the third housing 100c.

The second printer 730 prints a receipt related to a transaction (order of a transaction target). A second discharge port 172 to which a receipt printed by the second printer 730 is discharged is placed in the third operation surface 104 and aligned with the second operation device 720 in the right-left direction so as to overlap the second operation device 720 when viewed in the right-left direction.

The second control assembly 740 includes a control board on which a control circuit is mounted, and controls the second display 710, the settlement terminal 721 of the second operation device 720, and the second printer 730.

Furthermore, a second human sensor 750 is provided between the second operation device 720 and the second discharge port 172 in the third operation surface 104. The second human sensor 750 is, for example, an infrared sensor, detects a person facing the front of the third operation surface 104, and transmits a detection signal to the second control assembly 740.

The third operation surface 104 is perpendicular to the bottom surface of the first housing 100a, and is perpendicular to the floor surface on which the automatic transaction apparatus 1 is installed. A configuration in which the third operation surface 104 is inclined with respect to the bottom surface of the first housing 100a and the floor surface, may be adopted.

The banknote handling assembly 200, the coin handling assembly 300, a power supply assembly 400, and a control assembly 500 are provided inside the first housing 100a.

The banknote handling assembly 200 handles banknotes. More specifically, the banknote handling assembly 200 performs a depositing process on banknotes inserted into the banknote inlet portion 120 for the price of a transaction target ordered on the first display 610, that is, counts and stores the banknotes. In addition, as a dispensing process, the banknote handling assembly 200 discharges banknotes that are change, to the banknote outlet portion 130. The coin handling assembly 300 handles coins. More specifically, the coin handling assembly 300 performs a depositing process on coins inserted into the coin inlet portion 140 for the price of a transaction target ordered on the first display 610, that is, counts and stores the coins. In addition, as a dispensing process, the coin handling assembly 300 discharges coins that are change, to the coin outlet portion 150.

The power supply assembly 400 supplies power to both the banknote handling assembly 200 and the coin handling assembly 300.

The control assembly 500 is a second control circuit, includes a control board on which a control circuit is mounted, and controls the functions and operations of the parts constituting the banknote handling assembly 200 and the coin handling assembly 300. The control assembly 500 is communicably connected to the first control assembly 640 via a communication interface. The control assembly 500 can control each part based on operations performed for each part, information received via the communication interface, etc., while referring to various kinds of information stored in a memory. For example, a program corresponding to the control assembly 500 is stored in the memory in advance, and the functions and operations of the control assembly 500 are realized by hardware such as a CPU executing this program, whereby the functions and operations of the banknote handling assembly 200 and the coin handling assembly 300 of the present embodiment are realized. According to an exemplary embodiment, the control assembly 500 includes, for example, one or more general-purpose processing circuits such as a microprocessor, a microcontroller, and a digital signal processor, or a dedicated processing circuit such as an ASIC (application-specific integrated circuit).

The banknote handling assembly 200, the coin handling assembly 300, the power supply assembly 400, and the control assembly 500 are integrated to constitute the money handling block 10. Within the money handling block 10, the banknote handling assembly 200 and the coin handling assembly 300 constitute a money handling assembly 10a that handles money including banknotes and coins.

The money handling block 10 is installed on a pair of drawer rails 180 within the first housing 100a. As shown in FIG. 1B, the money handling block 10 can be pulled from the inside of the first housing 100a to the outside by opening the first front panel 110.

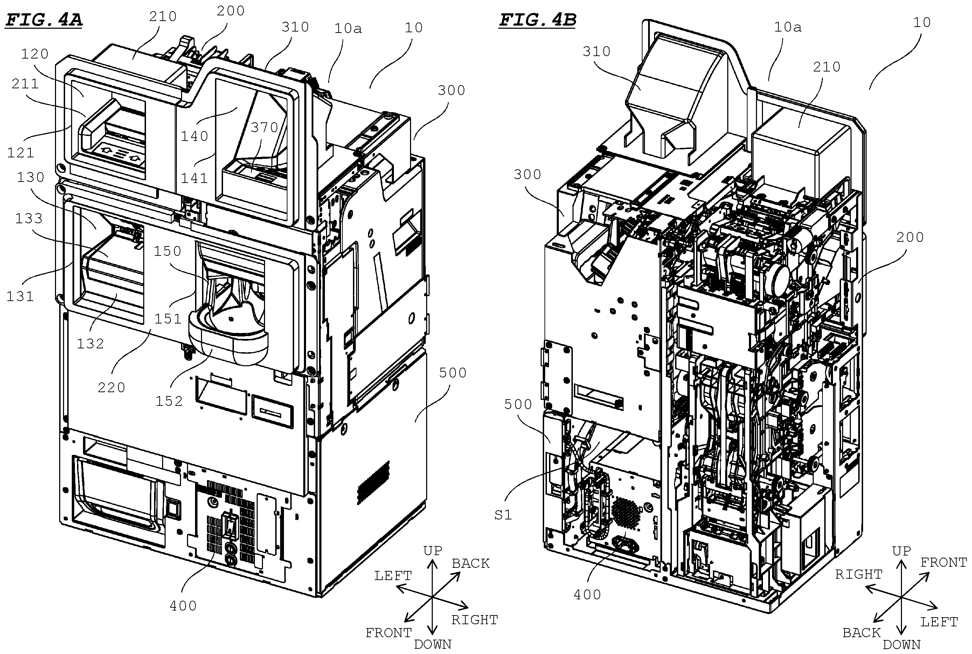

FIG. 4A is a front perspective view of the money handling block 10, and FIG. 4B is a back perspective view of the money handling block 10.

Within the first housing 100a, the banknote handling assembly 200 and the coin handling assembly 300 each have an outer shape close to a rectangular parallelepiped that is long in the front-back direction, and are arranged in the direction in which the banknote inlet portion 120 and the coin inlet portion 140 are aligned, that is, in the right-left direction. The dimension in the up-down direction of the banknote handling assembly 200 is made larger than the dimension in the up-down direction of the coin handling assembly 300. The banknote handling assembly 200 and the coin handling assembly 300 are placed such that upper end portions thereof are at the same height, and the lower end of the coin handling assembly 300 is positioned higher than the lower end of the banknote handling assembly 200.

A banknote inlet member 210 having the banknote inlet portion 120 is placed at an upper portion on the front side of the banknote handling assembly 200. Accordingly, the banknote inlet portion 120 is located at the upper portion of the banknote handling assembly 200. In addition, a coin inlet member 310 having the coin inlet portion 140 is placed at an upper portion on the front side of the coin handling assembly 300. Accordingly, the coin inlet portion 140 is located at the upper portion of the coin handling assembly 300. Furthermore, in the banknote handling assembly 200 and the coin handling assembly 300, an outlet member 220 having the banknote outlet portion 130 and the coin outlet portion 150 is placed below the banknote inlet member 210 and the coin inlet member 310.

The power supply assembly 400 has a rectangular parallelepiped shape that is long in the front-back direction, and is placed below the coin handling assembly 300 within the first housing 100a. The control assembly 500 has a substantially rectangular parallelepiped shape that is flat in the right-left direction, and is placed below the coin handling assembly 300 within the first housing 100a so as to be adjacent to the side, of the power supply assembly 400, opposite to the banknote handling assembly 200 side.

By placing the coin handling assembly 300, which has a smaller dimension in the up-down direction than the banknote handling assembly 200, at such a height that the coin inlet portion 140 overlaps the banknote inlet portion 120 when viewed in the right-left direction, a space S1 is formed below the coin handling assembly 300 and next to the banknote handling assembly 200 within the first housing 100a. This space S1 is used for the placement of the power supply assembly 400 and the control assembly 500.

Portions of the banknote inlet member 210 and the coin inlet member 310, that is, portions of the banknote inlet portion 120 and the coin inlet portion 140, protrude upward from the first housing 100a and are housed in the second housing 100b. Furthermore, the upper side of the first front panel 110, that is, the first operation surface 101, with respect to an upper end portion of the coin inlet portion 140 also extends upward more than the first housing 100a and protrudes to the second housing 100b side.

A gap space is provided between the lower end of the coin handling assembly 300 and the upper end of the power supply assembly 400. If a coin storage container is added to the coin handling assembly 300, this storage container can be placed in the gap space.

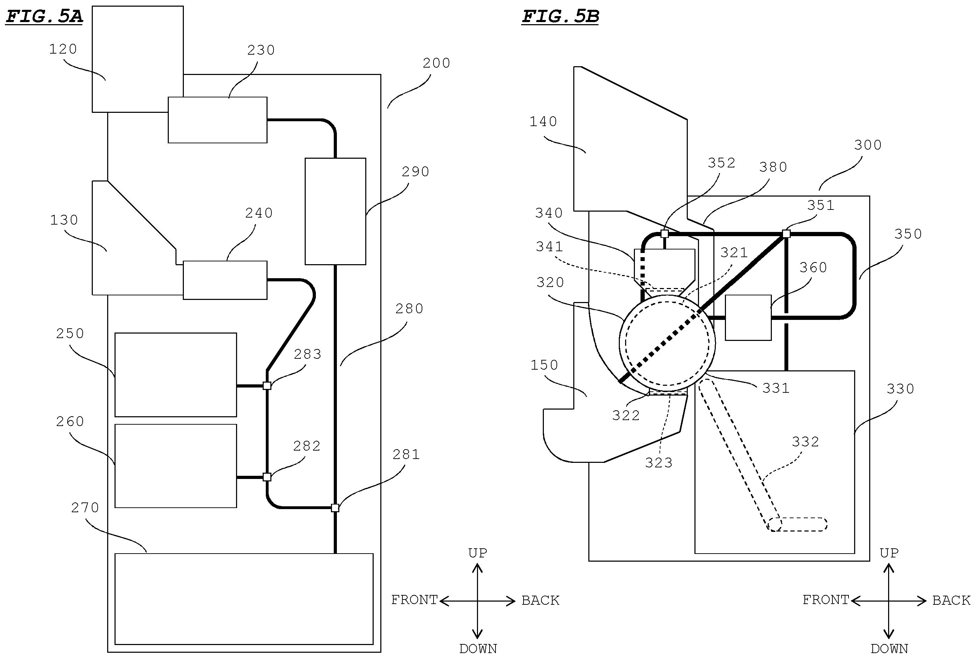

FIG. 5A shows a schematic configuration of the banknote handling assembly 200. FIG. 5A shows the banknote handling assembly 200 as viewed from the right side.

The banknote handling assembly 200 includes a banknote taking-in unit 230, a banknote discharge mechanism 240, a first banknote storage container 250, a second banknote storage container 260, a banknote collection container 270, a banknote transport unit 280, and a banknote recognition unit 290.

The banknote taking-in unit 230 is placed behind the banknote inlet portion 120. The banknote taking-in unit 230 has a taking-in mechanism, takes banknotes inserted into the banknote inlet portion 120 one by one therein, and sends the banknotes to the banknote transport unit 280.

The banknote discharge mechanism 240 is placed behind the banknote outlet portion 130. The banknote discharge mechanism 240 includes a stacking wheel made of rubber, etc., and discharges banknotes sent from the banknote transport unit 280, to the banknote outlet portion 130.

The first banknote storage container 250 and the second banknote storage container 260 are placed below the banknote outlet portion 130 and the banknote discharge mechanism 240 so as to be aligned in the up-down direction. The first banknote storage container 250 and the second banknote storage container 260 each include a feeding mechanism, and can feed out banknotes stored therein to the banknote transport unit 280. Banknotes of lower denominations to be dispensed as change are stored for each denomination in the first banknote storage container 250 and the second banknote storage container 260. For example, 1-dollar notes are stored in the first banknote storage container 250, and 5-dollar notes are stored in the second banknote storage container 260.

The banknote collection container 270 is placed below the first banknote storage container 250 and the second banknote storage container 260. The banknote collection container 270 is longer in the front-back direction than the first banknote storage container 250 and the second banknote storage container 260. Banknotes of higher denominations that are not dispensed as change, such as banknotes of 10 dollars or more, are stored (collected) in the banknote collection container 270. Furthermore, banknotes that cannot be stored in the first banknote storage container 250 and the second banknote storage container 260 are stored (collected) in the banknote collection container 270. The banknotes stored in the banknote collection container 270 can be taken out from the banknote collection container 270 by pulling out the banknote collection container 270 frontward.

The banknote transport unit 280 is placed behind the banknote taking-in unit 230, the banknote discharge mechanism 240, the first banknote storage container 250, and the second banknote storage container 260. The banknote transport unit 280 is arranged between the banknote taking-in unit 230, the banknote discharge mechanism 240, the first banknote storage container 250, the second banknote storage container 260, and the banknote collection container 270, and transports banknotes therebetween. The banknote transport unit 280 includes a transport mechanism composed of a plurality of rollers, a plurality of belts, etc.

The banknote transport unit 280 is provided with a first diversion mechanism 281, a second diversion mechanism 282, and a third diversion mechanism 283. The first diversion mechanism 281 can, for example, divert banknotes flowing in the banknote transport unit 280 from the banknote inlet portion 120 side toward the banknote outlet portion 130 side, to the banknote collection container 270 side. The second diversion mechanism 282 can, for example, divert banknotes flowing in the banknote transport unit 280 from the banknote inlet portion 120 side toward the banknote outlet portion 130 side, to the second banknote storage container 260 side. The third diversion mechanism 283 can, for example, divert banknotes flowing in the banknote transport unit 280 from the banknote inlet portion 120 side toward the banknote outlet portion 130 side, to the first banknote storage container 250 side.

The banknote recognition unit 290 is provided on the banknote taking-in unit 230 side with respect to the first diversion mechanism 281 in the banknote transport unit 280. The banknote recognition unit 290 recognizes the attributes of banknotes flowing in the banknote transport unit 280, and outputs the recognition result. The attributes to be recognized include the authenticity, denomination, fitness, etc., of each banknote. The first diversion mechanism 281, the second diversion mechanism 282, and the third diversion mechanism 283 operate in accordance with the recognition result of the banknote recognition unit 290. Furthermore, the banknote recognition unit 290 also counts the banknotes. The banknote recognition unit 290 is composed of, for example, a sensor such as an optical sensor or a magnetic sensor.

FIG. 5B shows a schematic configuration of the coin handling assembly 300. FIG. 5B shows the coin handling assembly 300 as viewed from the right side.

The coin handling assembly 300 includes a coin feeding unit 320, a coin storage container 330, a coin temporary storage portion 340, a coin transport unit 350, and a coin recognition unit 360.

The coin feeding unit 320 is placed below the coin inlet portion 140. Coins inserted into the coin inlet portion 140 are introduced into the coin feeding unit 320 via a chute 380. The coin feeding unit 320 has a feeding disc 321, and feeds out coins one by one to the coin transport unit 350 by rotating the feeding disc 321. Furthermore, a discharge port 322 is provided in a bottom portion of the coin feeding unit 320 so as to be connected to the coin outlet portion 150. The discharge port 322 is closed by a shutter 323. If deformed coins or foreign objects remain in the coin feeding unit 320, the shutter 323 is opened, and these coins or objects are discharged to the coin outlet portion 150.

The coin storage container 330 is placed below the coin feeding unit 320 and the coin transport unit 350. Coins are stored in the coin storage container 330 in a state where the denominations thereof are mixed. The coin storage container 330 has a coin discharge port 331 connected to the coin feeding unit 320, and a transport mechanism 332 composed of a conveyor, etc. The coins stored in the coin storage container 330 are transported by the transport mechanism 332 and discharged into the coin feeding unit 320 via the discharge port 331.

The coin temporary storage portion 340 is placed below the coin feeding unit 320. Coins transported from the coin transport unit 350 are temporarily stored in the coin temporary storage portion 340. A shutter 341 is provided at a bottom portion of the coin temporary storage portion 340, and when the shutter 341 opens, the coins in the coin temporary storage portion 340 fall into the coin feeding unit 320.

The coin transport unit 350 is arranged between the coin feeding unit 320, the coin storage container 330, the coin temporary storage portion 340, and the coin outlet portion 150, and transports coins therebetween. The coin transport unit 350 includes a transport mechanism composed of a plurality of rollers, belts, etc.

The coin transport unit 350 is provided with a first diversion mechanism 351 and a second diversion mechanism 352. The first diversion mechanism 351 can divert coins flowing in the coin transport unit 350, to the coin storage container 330 side or the coin outlet portion 150 side. The second diversion mechanism 352 can divert coins flowing in the coin transport unit 350, to the coin temporary storage portion 340 side.

The coin recognition unit 360 is provided on the coin feeding unit 320 side with respect to the first diversion mechanism 351 in the coin transport unit 350. The coin recognition unit 360 recognizes the attributes of coins flowing in the coin transport unit 350, and outputs the recognition result. The attributes to be recognized include the authenticity, denomination, fitness, etc., of each coin. The first diversion mechanism 351 and the second diversion mechanism 352 operate in accordance with the recognition result of the coin recognition unit 360. Furthermore, the coin recognition unit 360 also counts the coins. The coin recognition unit 360 is composed of, for example, a sensor such as an optical sensor or a magnetic sensor.

The banknote handling assembly 200 has a configuration in which the first banknote storage container 250, the second banknote storage container 260, and the banknote collection container 270, that is, a plurality of banknote storage units, are arranged in the up-down direction rather than the front-back direction. Accordingly, the banknote handling assembly 200 is made compact in size in the front-back direction. Furthermore, the coin handling assembly 300 has only one coin storage container 330. Accordingly, the coin handling assembly 300 is made compact in size in the front-back direction. As described above, the banknote handling assembly 200 and the coin handling assembly 300 are made compact in size in the direction (front-back direction) orthogonal to the direction in which the banknote handling assembly 200 and the coin handling assembly 300 are aligned. Accordingly, the automatic transaction apparatus 1 that is thin in the direction orthogonal to the direction in which the banknote handling assembly 200 and the coin handling assembly 300 are aligned, that is, in the depth direction, can be realized.

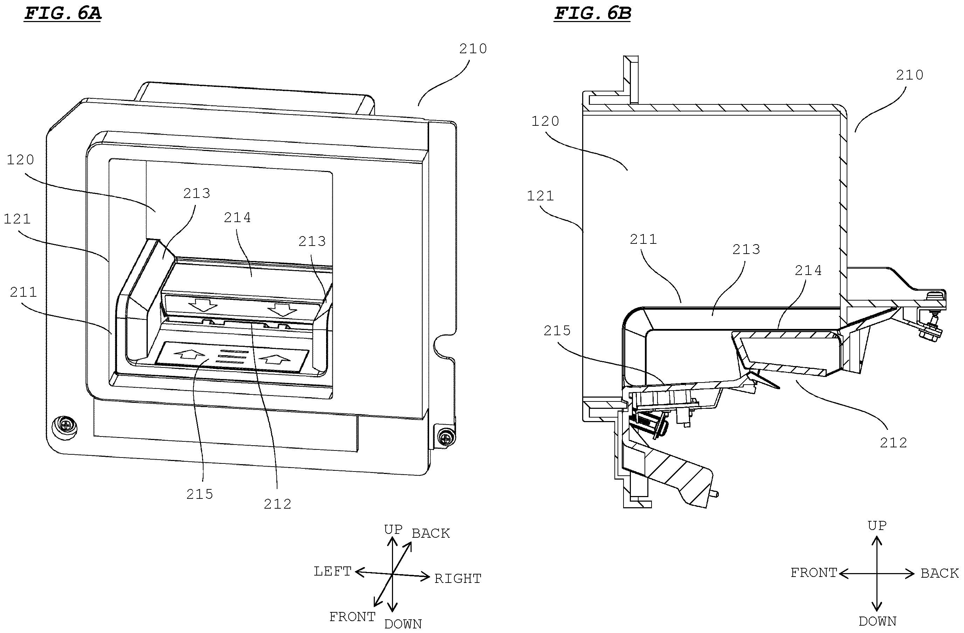

FIGS. 6A and 6B are respectively a perspective view and a longitudinal cross-sectional view of the banknote inlet member 210 having the banknote inlet portion 120.

In the banknote inlet member 210, a banknote insertion table 211 that can receive a plurality of banknotes is provided at a bottom portion of the banknote inlet portion 120. The banknote insertion table 211 has an inlet 212 that is open in a horizontally long substantially quadrangular shape, in a back portion thereof, and a pair of guides 213 are formed on both sides of the inlet 212 so as to extend frontward. A lid portion 214 is provided at the inlet 212 so as to be able to be opened and closed vertically.

Furthermore, a quadrangular display board 215 with arrow marks is placed on the front side of the banknote insertion table 211 at the bottom portion of the banknote inlet portion 120. When a banknote is to be inserted into the banknote inlet portion 120, an LED provided on the display board 215 lights up.

A banknote to be inserted is placed on the banknote insertion table 211 such that the face and back thereof face in the up-down direction, is moved to the back side, and is inserted into the inlet 212. At this time, both ends of the banknote are guided by the pair of guides 213. When the lid portion 214 is closed, a gap is formed between the lid portion 214 and the inlet 212, and the banknote can be inserted into this gap. When more banknotes are to be inserted, the lid portion 214 can be opened manually. The banknotes inserted into the inlet 212 are taken into the banknote handling assembly 200 by the operation of the banknote taking-in unit 230. The dimension in the up-down direction of the banknote inlet portion 120 is set to a size that allows the lid portion 214 to be fully opened.

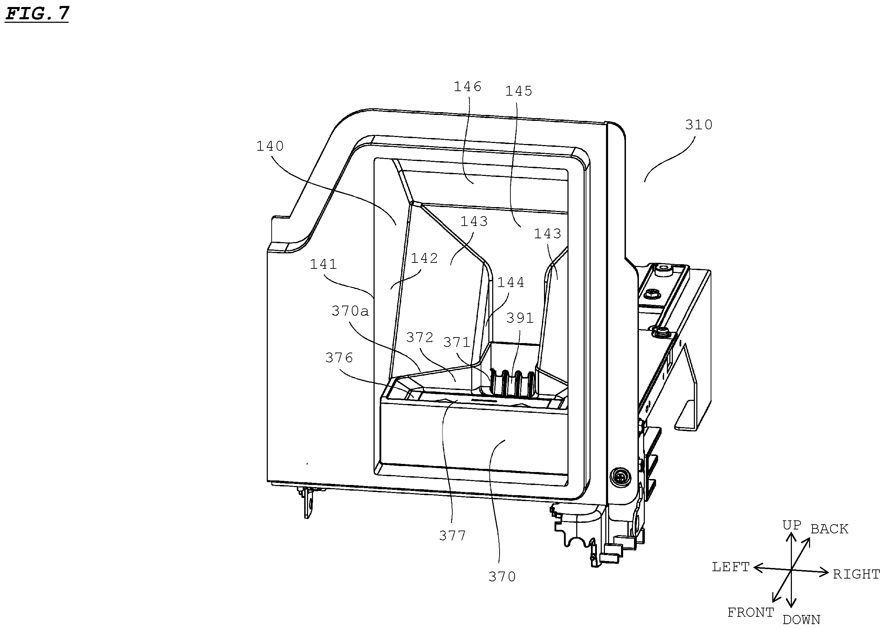

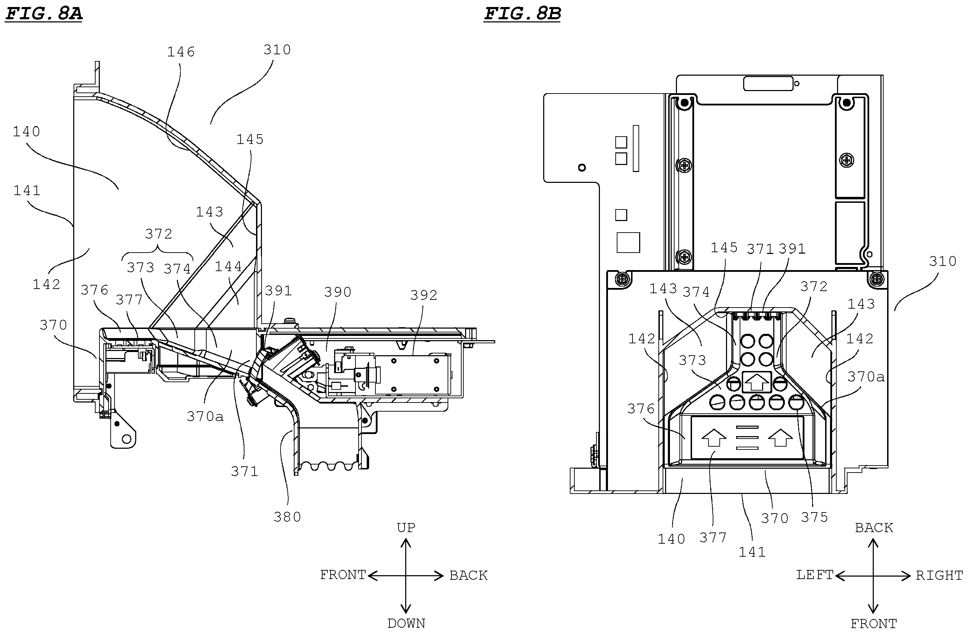

FIG. 7 is a perspective view of the coin inlet member 310 having the coin inlet portion 140 and components therearound. FIGS. 8A and 8B are respectively a longitudinal cross-sectional view and a transverse cross-sectional view of the coin inlet member 310 having the coin inlet portion 140 and the components therearound.

In the coin inlet member 310, a coin reception portion 370 having concave shape that can receive a plurality of coins is provided at a bottom portion of the coin inlet portion 140. In an interior 370a of the coin reception portion 370, a taking-in port 371 is provided at a back end, which is an end portion opposite to the coin inlet 141 side, so as to be open in a substantially quadrangular shape. Coins inserted into the coin reception portion 370 are taken into the interior of the coin handling assembly 300 through the taking-in port 371.

In the interior 370a of the coin reception portion 370, a passage 372 that has a sloping bottom surface sloping down toward the taking-in port 371 side and in which coins flow toward the taking-in port 371, is provided. The passage 372 includes a first passage 373 that has an entrance width wider than the width of the taking-in port 371 and has a width gradually narrowing toward the taking-in port 371 side, and a second passage 374 that extends from the exit of the first passage 373 to the taking-in port 371 with a substantially constant width. A plurality of circular holes 375 are formed in the bottom surface of the passage 372. Small foreign objects inserted together with coins are discharged from the holes 375, making it difficult for the foreign objects to enter through the taking-in port 371.

In the interior 370a of the coin reception portion 370, a front coin reception portion 376 on the front side, that is, the coin inlet 141 side, with respect to the passage 372, has a width equal to that of the entrance of the first passage 373 and has a horizontal bottom surface. A quadrangular display board 377 with arrow marks is placed on the bottom surface of the front coin reception portion 376. When a coin is to be inserted into the coin inlet portion 140, an LED provided on the display board 377 lights up. Since the display board 377 is placed on the horizontal surface, it is easy for the user to see the display board 377.

The coin inlet portion 140 has first side wall surfaces 142 located on the right and left sides of the front coin reception portion 376 of the coin reception portion 370, second side wall surfaces 143 located on the right and left sides of the first passage 373 of the coin reception portion 370, third side wall surfaces 144 located on the right and left sides of the second passage 374 of the coin reception portion 370, a back wall surface 145, and a top wall surface 146.

The right and left second side wall surfaces 143 are inclined toward the back side, that is, toward the back side of the coin inlet portion 140. Accordingly, the space above the coin reception portion 370 can be expanded as much as possible, making it easier for the user to insert their hand into this space. In addition, the top wall surface 146 is inclined such that the coin inlet 141 side (front side) thereof is higher and the taking-in port 371 side (back side) thereof is lower. Accordingly, it is possible to make it difficult for the components placed at a lower portion of the second housing 100b to interfere with the coin inlet member 310 while widening the coin inlet 141 in the up-down direction.

The chute 380 is connected to the taking-in port 371. The taking-in port 371 is opened and closed by a shutter 391. An opening/closing mechanism 390 including the shutter 391 and an actuator 392 that drives the shutter 391 is placed behind the coin inlet portion 140. The shutter 391 is opened when a coin is inserted into the coin inlet portion 140.

As shown in FIG. 4A, a banknote discharge table 132 is provided at a bottom portion of the banknote outlet portion 130. Banknotes are discharged from the banknote handling assembly 200 to the banknote discharge table 132 by the operation of the banknote discharge mechanism 240. A lid portion 133 for covering discharged banknotes is provided at the banknote discharge table 132. The lid portion 133 is locked by a locking mechanism, and when all banknotes to be dispensed are discharged to the banknote discharge table 132, the lock is released and the lid portion 133 is opened. A residual detection sensor is placed at the banknote discharge table 132, and when the residual detection sensor detects that all the discharged banknotes have been removed, the lid portion 133 is closed.

A coin reception portion 152 is provided at a bottom portion of the coin outlet portion 150. A front portion of the coin reception portion 152 projects frontward from the first operation surface 101 of the first housing 100a. Coins discharged from the coin handling assembly 300 to the coin outlet portion 150 are accumulated in the coin reception portion 152.

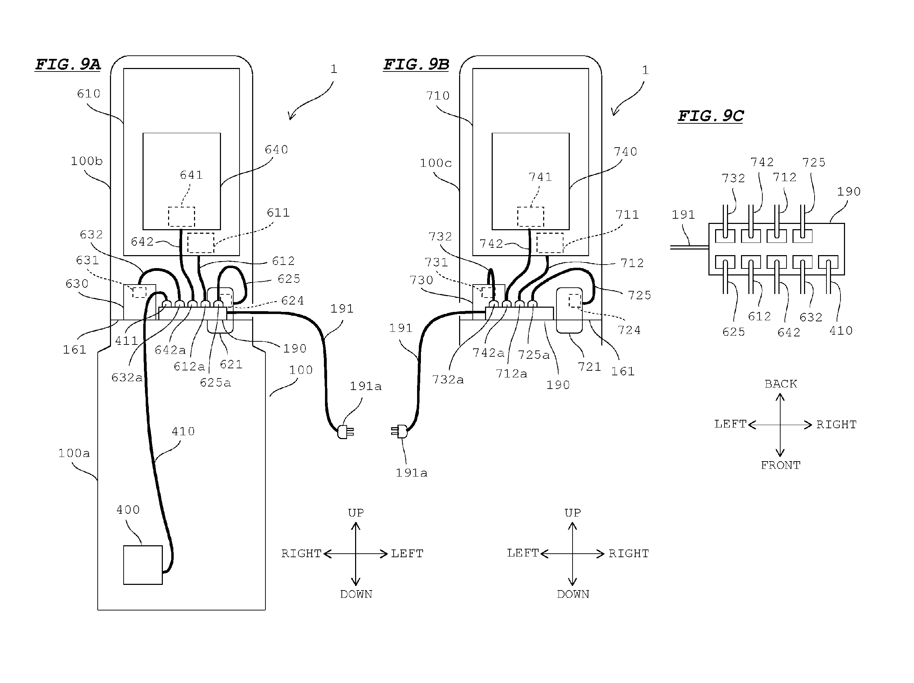

FIGS. 9A to 9C are schematic diagrams illustrating a routing process of power cords in the automatic transaction apparatus 1. FIG. 9A is a back view of the interior of the first housing 100a and the second housing 100b. FIG. 9B is a front view of the interior of the third housing 100c and a power strip 190 placed in the interior of the second housing 100b. FIG. 9C is a top view of the power strip 190 to which nine power cords are connected.

The power strip 190 having nine plug sockets is placed on the installation plate 161 within the second housing 100b.

As shown in FIGS. 9A and 9C, a plug 411 of a power cord 410 extending from the power supply assembly 400 is connected to the power strip 190. In addition, a first power supply unit 611 that supplies power to the first display 610 is built in the first display 610, and a plug 612a of a power cord 612 extending from the first power supply unit 611 is connected to the power strip 190. Furthermore, the settlement terminal 621 of the first operation device 620, the first printer 630, and the first control assembly 640 also respectively have built-in power supply units 624, 631, and 641 that supply power thereto, and plugs 625a, 632a, and 642a of power cords 625, 632, and 642 extending from these power supply units 624, 631, and 641 are also connected to the power strip 190.

As shown in FIGS. 9B and 9C, a second power supply unit 711 that supplies power to the second display 710 is built in the second display 710, and a plug 712a of a power cord 712 extending from the second power supply unit 711 is connected to the power strip 190. Furthermore, the settlement terminal 721 of the second operation device 720, the second printer 730, and the second control assembly 740 also respectively have built-in power supply units 724, 731, and 741 that supply power thereto, and plugs 725a, 732a, and 742a of power cords 725, 732, and 742 extending from these power supply units 724, 731, and 741 are also connected to the power strip 190.

A power cord 191 of the power strip 190 extends from the inside of the second housing 100b to the outside, and a plug 191a of the power cord 191 is connected to a commercial power supply outlet. AC power from the commercial power supply is supplied to the power supply assembly 400, the first power supply unit 611, the respective power supply units 624, 631, and 641 of the settlement terminal 621, the first printer 630, and the first control assembly 640, the second power supply unit 711, and the respective power supply units 724, 731, and 741 of the settlement terminal 721, the second printer 730, and the second control assembly 740 via the power strip 190.

The first power supply unit 611 of the first display 610 and at least one of the power supply units of the settlement terminal 621, the first printer 630, and the first control assembly 640 may be integrated, and in this case, the integrated power supply unit is connected to the power strip 190. Similarly, the second power supply unit 711 of the second display 710 and at least one of the power supply units of the settlement terminal 721, the second printer 730, and the second control assembly 740 may be integrated, and in this case, the integrated power supply unit is connected to the power strip 190. For example, when power is supplied from one power supply unit to the first display 610, the settlement terminal 621, the first printer 630, and the first control assembly 640 and power is supplied from one power supply unit to the second display 710, the settlement terminal 721, the second printer 730, and the second control assembly 740, the plugs of the power cords of these power supply units and the plug 411 of the power cord 410 of the power supply assembly 400 are connected to the power strip 190.

Next, the operation of the automatic transaction apparatus 1 will be described.

When performing a transaction such as purchase of a commodity using the automatic transaction apparatus 1, the user (customer) stands in front of the side having the first operation surface 101 and the second operation surface 103, that is, the front side of the automatic transaction apparatus 1, or in front of the side having the third operation surface 104, that is, the back side of the automatic transaction apparatus 1. On the front side of the automatic transaction apparatus 1, both electronic settlement and cash settlement can be performed. On the other hand, on the back side of the automatic transaction apparatus 1, electronic settlement can be performed, but cash settlement cannot be performed. Therefore, a user who wishes to make a cash settlement orders a transaction target on the front side of the automatic transaction apparatus 1.

When the user stands on the front side of the automatic transaction apparatus 1, the user is detected by the first human sensor 650. The first display 610 lights up, and the first screen for ordering a transaction target is displayed on the first display 610.

The user performs predetermined operations on the first screen displayed on the first display 610, to order a transaction target (commodity, service) and select (give an instruction of) a settlement method for the price of the transaction target. Information on the ordered transaction target and information on the selected settlement method are transmitted from the first display 610 to the first control assembly 640.

The first control assembly 640 transmits the information on the transaction target ordered on the first screen to a terminal device such as a personal computer that is installed in the store and receives orders for transaction targets.

Furthermore, if the settlement method is electronic settlement, that is, if electronic settlement is instructed by input to the first display 610, the first control assembly 640 receives an operation for electronic settlement by the user at the first operation device 620, that is, at the settlement terminal 621, and executes a process of performing electronic settlement of the price of the transaction target ordered on the first screen, based on this operation.

On the other hand, if the settlement method is cash settlement, that is, if cash settlement is instructed by input to the first display 610, the first control assembly 640 gives an instruction to the control assembly 500 to accept depositing.

In response to receiving the instruction to accept depositing, the control assembly 500 causes the banknote handling assembly 200 and the coin handling assembly 300 to start operating for the depositing process. The banknote handling assembly 200 lights up or blinks the LED on the display board 215 at the banknote inlet portion 120. In addition, the coin handling assembly 300 lights up or blinks the LED on the display board 377 at the coin inlet portion 140, and opens the shutter 391 to open the taking-in port 371 of the coin reception portion 370.

When paying the price with banknotes, the user inserts one or more banknotes into the banknote inlet portion 120. That is, the user places the banknotes on the banknote insertion table 211 and inserts the banknotes into the inlet 212 within the banknote inlet portion 120.

In addition, when paying the price with coins, the user inserts one or more coins into the coin inlet portion 140. That is, the user inserts the coins into the coin reception portion 370 within the coin inlet portion 140. At this time, the user may place the coins in the passage 372 of the coin reception portion 370, or may place the coins on the front coin reception portion 376 of the coin reception portion 370 to check the number and the nominations of the coins, and then pour the coins into the passage 372. The inserted coins flow into the taking-in port 371.

Furthermore, when paying the price with banknotes and coins, the user inserts banknotes into the banknote inlet portion 120 and inserts coins into the coin inlet portion 140.

In the automatic transaction apparatus 1, the banknote inlet portion 120 and the coin inlet portion 140 are arranged side by side at the same height position, so that it is easier for the user to recognize that the banknote inlet portion 120 and the coin inlet portion 140 are the same inlet portion. Therefore, it becomes easier for the user to smoothly insert banknotes and coins into the banknote inlet portion 120 and the coin inlet portion 140. Furthermore, since the coin inlet 141 is wider in the up-down direction than the banknote inlet 121, it becomes easier for the user to insert a plurality of coins into the coin reception portion 370 through the coin inlet 141.

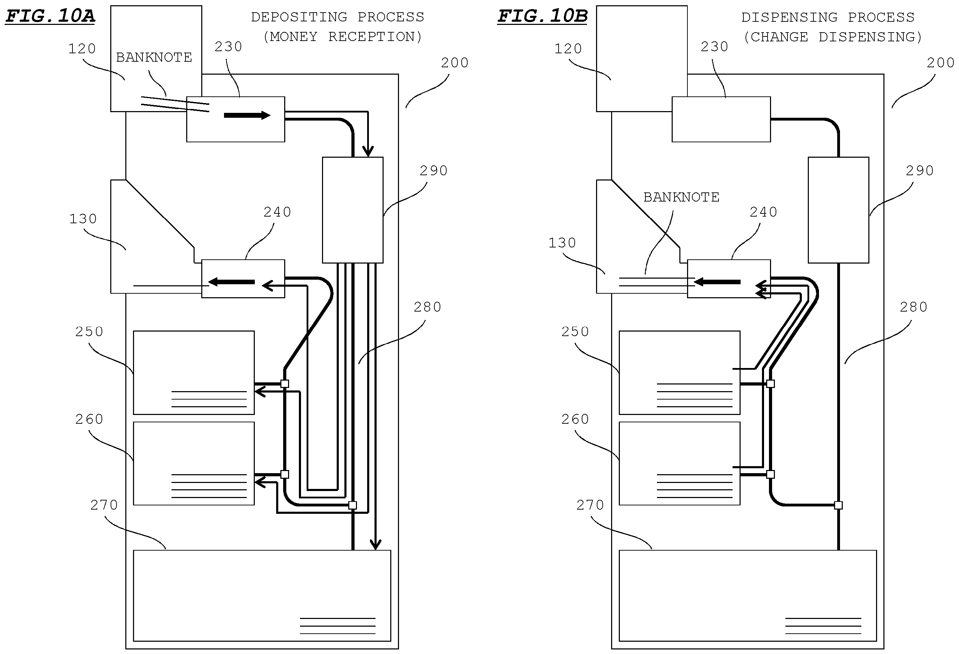

As shown in FIG. 10A, in the banknote handling assembly 200, when the depositing process is executed, banknotes inserted into the banknote inlet portion 120 are taken into the banknote handling assembly 200 through the inlet 212 and sent to the banknote transport unit 280 by the operation of the banknote taking-in unit 230. The banknotes flowing in the banknote transport unit 280 pass through the banknote recognition unit 290 and the attributes thereof are recognized. As a result of the recognition by the banknote recognition unit 290, the banknotes that are normal banknotes and whose denominations could be recognized are transported and stored into the banknote collection container 270, the first banknote storage container 250, or the second banknote storage container 260 in accordance with the denominations thereof. On the other hand, as a result of the recognition by the banknote recognition unit 290, the banknotes that are not normal banknotes or the banknotes whose denominations could not be recognized are transported to the banknote discharge mechanism 240 and discharged to the banknote outlet portion 130 by the operation of the banknote discharge mechanism 240. When the banknotes pass through the banknote recognition unit 290, the banknotes are counted.

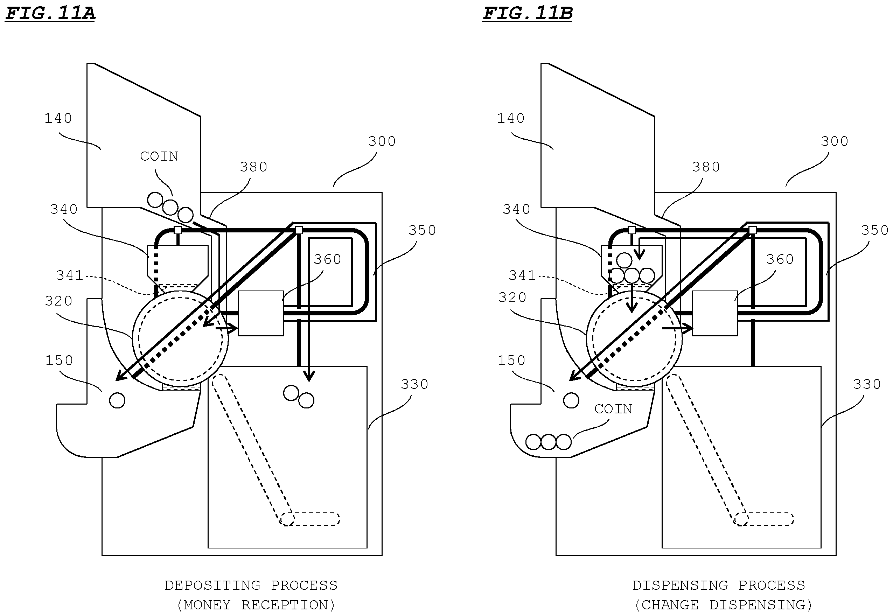

As shown in FIG. 11A, in the coin handling assembly 300, when the depositing process is executed, coins inserted into the coin inlet portion 140 are taken into the coin handling assembly 300 through the taking-in port 371 and introduced into the coin feeding unit 320 through the chute 380. The coins in the coin feeding unit 320 are fed out to the coin transport unit 350. The coins flowing in the coin transport unit 350 pass through the coin recognition unit 360 and the attributes thereof are recognized. As a result of the recognition by the coin recognition unit 360, the coins that are normal coins and whose denominations could be recognized are transported and stored into the coin storage container 330. On the other hand, as a result of the recognition by the coin recognition unit 360, the coins that are not normal coins or the coins whose denominations could not be recognized are transported to the coin outlet portion 150 and discharged to the coin outlet portion 150. When the coins pass through the coin recognition unit 360, the coins are counted.

When the depositing process is completed, the control assembly 500 obtains the amount of the deposited money based on the counted number of banknotes or coins of each denomination, and notifies the first control assembly 640 of this amount. At the first control assembly 640, a change amount is calculated based on the notified amount of the deposited money and the monetary amount corresponding to the transaction, and if change is required, a dispensing instruction is sent to the control assembly 500 together with information regarding the change amount. The information regarding the change amount includes the denominations and the numbers of banknotes and coins to be dispensed. In response to receiving the dispensing instruction, the control assembly 500 controls the banknote handling assembly 200 and the coin handling assembly 300 to dispense the change. Depending on whether the change is only banknotes, only coins, or banknotes and coins, only the banknote handling assembly 200, only the coin handling assembly 300, or both handling assemblies 200 and 300 start operating for the dispensing process.

In the present embodiment, an instruction to accept depositing and a dispensing instruction are cash handling instructions that are notified from the first control assembly 640, which is the first control circuit, to the control assembly 500, which is the second control circuit.

As shown in FIG. 10B, in the banknote handling assembly 200, when the dispensing process is started, each banknote of each denomination determined as change is fed out from the first banknote storage container 250 and/or the second banknote storage container 260 to the banknote transport unit 280 and transported to the banknote discharge mechanism 240. Then, each banknote is discharged to the banknote outlet portion 130 by the operation of the banknote discharge mechanism 240.

As shown in FIG. 11B, in the coin handling assembly 300, coins that can be change by a dispensing preparation process described later are temporarily stored in the coin temporary storage portion 340 in a state where the denominations thereof are mixed. When the dispensing process is started, the shutter 341 of the coin temporary storage portion 340 opens and the coins fall into the coin feeding unit 320. The coins in the coin feeding unit 320 are fed out to the coin transport unit 350, and pass through the coin recognition unit 360, and the denominations thereof are recognized. Each coin of each denomination determined as change is transported to the coin outlet portion 150 and discharged to the coin outlet portion 150. On the other hand, each coin of each denomination not determined as change is returned to the coin temporary storage portion 340.

When dispensing of the change is completed as described above, the control assembly 500 notifies the first control assembly 640 that the cash handling has been completed.

When the process of electronic settlement is completed or when the first control assembly 640 receives notification that the cash handling has been completed, the first control assembly 640 causes the first printer 630 to print a receipt. The printed receipt is discharged from the first discharge port 171 of the second operation surface 103.

The calculation for cash settlement may be executed by the control assembly 500. In that case, the first control assembly 640 notifies the control assembly 500 of the price of the transaction target ordered on the first screen. The control assembly 500 controls the banknote handling assembly 200 and the coin handling assembly 300, that is, the money handling assembly 10a, to count the money (banknotes, coins) inserted into at least one of the banknote inlet portion 120 and the coin inlet portion 140, and to perform a depositing/dispensing process of discharging money to at least one of the banknote outlet portion 130 and the coin outlet portion 150, if there is a difference between the amount of the inserted money and the notified amount.

When the inserted money is counted and the depositing process is completed, the control assembly 500 obtains the amount of the deposited money based on the counted number of banknotes or coins of each denomination, and determines whether or not change is required, by comparing this amount with the price of the transaction target. If change is required, the control assembly 500 calculates the amount of the change and determines the denominations and numbers of banknotes and coins to be dispensed. Then, to dispense the change, the control assembly 500 controls the banknote handling assembly 200 and the coin handling assembly 300 to perform a dispensing process of discharging at least either banknotes or coins in accordance with the amount of the change. After the depositing process is executed, the dispensing process is executed if necessary, and the reception of the amount of cash corresponding to the transaction is completed, the control assembly 500 notifies the first control assembly 640 that the cash transaction has been completed.

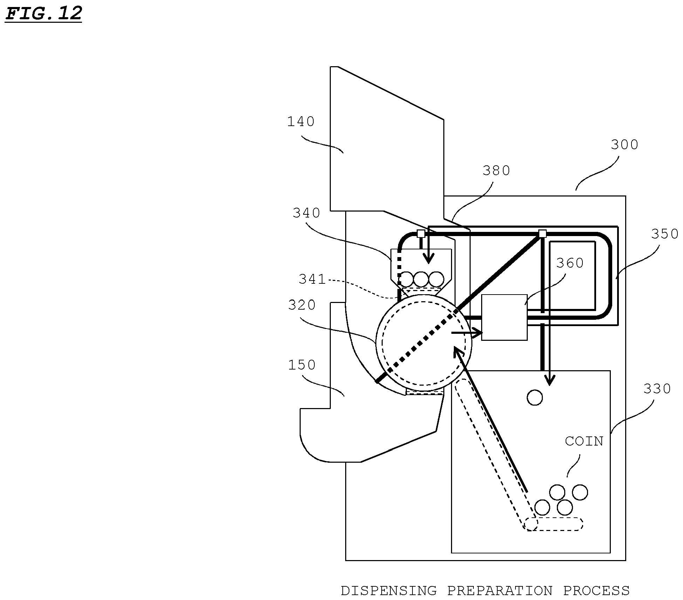

When a transaction with cash is executed and there is no coin in the coin temporary storage portion 340 or the coins in the coin temporary storage portion 340 are insufficient, the dispensing preparation process is started. As shown in FIG. 12, coins are transported from the coin storage container 330 to the coin feeding unit 320, and the coins are fed out from the coin feeding unit 320 to the coin transport unit 350. The denominations of the coins are recognized by the coin recognition unit 360, the coins of each denomination required for replenishment are transported to the coin temporary storage portion 340, and the coins of each denomination not required for replenishment are returned to the coin storage container 330. When an appropriate amount of coins is temporarily stored in the coin temporary storage portion 340, the dispensing preparation process ends.

When the user stands on the back side of the automatic transaction apparatus 1, the user is detected by the second human sensor 750. The second display 710 lights up, and the second screen for ordering a transaction target is displayed on the second display 710.

The user performs predetermined operations on the second screen displayed on the second display 710, to order a transaction target (commodity, service). As for orders via the second display 710, only electronic settlement is possible, and thus no selection (instruction) of a settlement method is performed. Information on the ordered transaction target is transmitted from the second display 710 to the second control assembly 740.

The second control assembly 740 transmits the information on the transaction target ordered on the second screen to a terminal device that is installed in the store. Furthermore, the second control assembly 740 receives an operation for electronic settlement by the user at the second operation device 720, that is, at the settlement terminal 721, and executes a process of performing electronic settlement of the price of the transaction target ordered on the second screen, based on this operation.

When the process of electronic settlement is completed, the second control assembly 740 causes the second printer 730 to print a receipt. The printed receipt is discharged from the second discharge port 172 of the third operation surface 104.

As described above, with the automatic transaction apparatus 1, two users can simultaneously order and settle for transactions, that is, perform transactions.

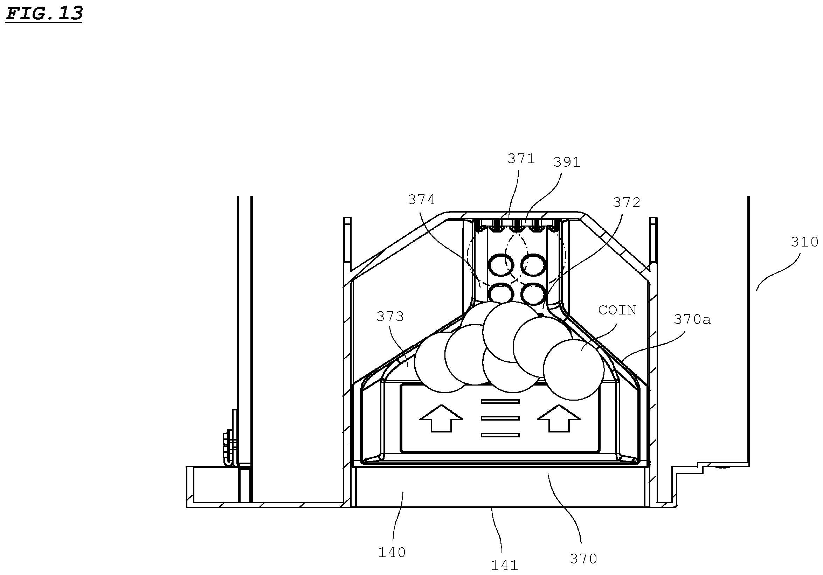

FIG. 13 shows a state where coins are jammed in the coin reception portion 370 of the coin inlet portion 140.

If many coins are inserted into the coin reception portion 370 of the coin inlet portion 140 at once, a coin jam may occur. As described above, the passage 372 of the coin reception portion 370 is composed of the first passage 373 that has a width gradually narrowing toward the taking-in port 371 side and the second passage 374 that extends from the exit of the first passage 373 to the taking-in port 371. Therefore, a coin jam does not occur near the taking-in port 371, which is located at the backmost portion of the coin inlet portion 140 (see an alternate long and short dash line), but rather at the exit of the first passage 373, which is located frontward of the taking-in port 371 by the length of the second passage 374, and a state where the coins are accumulated in the first passage 373 occurs. Thus, the user can easily visually recognize that the coin jam has occurred in the coin reception portion 370, through the coin inlet 141.

The automatic transaction apparatus 1 can perform a banknote replenishment process of replenishing the first banknote storage container 250 and the second banknote storage container 260 of the banknote handling assembly 200 with banknotes and a coin replenishment process of replenishing the coin storage container 330 of the coin handling assembly 300 with coins. The banknotes for replenishment are inserted into the banknote inlet portion 120 and transported to the first banknote storage container 250 and the second banknote storage container 260 by the banknote transport unit 280. In addition, the coins for replenishment are inserted into the coin inlet portion 140 and transported to the coin storage container 330 by the coin transport unit 350.

In the automatic transaction apparatus 1, the height positions of the banknote inlet portion 120 and the coin inlet portion 140 are the same. Thus, when replenishment with banknotes and replenishment with coins are performed in parallel, one dedicated tray is placed in front of the banknote inlet portion 120 and the coin inlet portion 140, whereby replenishment with banknotes and replenishment with coins can be performed while the dedicated tray prevents banknotes or coins from falling onto the floor surface.

### <Modifications>

Although the embodiment of the present invention has been described above, the present invention is not limited by the above embodiment, etc., in any way, and various modifications other than the above may also be made to the embodiment of the present invention.

For example, the second operation surface 103 does not have to be flush with the first operation surface 101. For example, the second housing 100b may be shifted backward from the position in the above embodiment, whereby the second operation surface 103 may be located in back of the first operation surface 101. In addition, the third operation surface 104 does not have to be flush with the opposite-facing surface 102. For example, the third housing 100c may be shifted frontward from the position in the above embodiment, whereby the third operation surface 104 may be located in back of the opposite-facing surface 102.

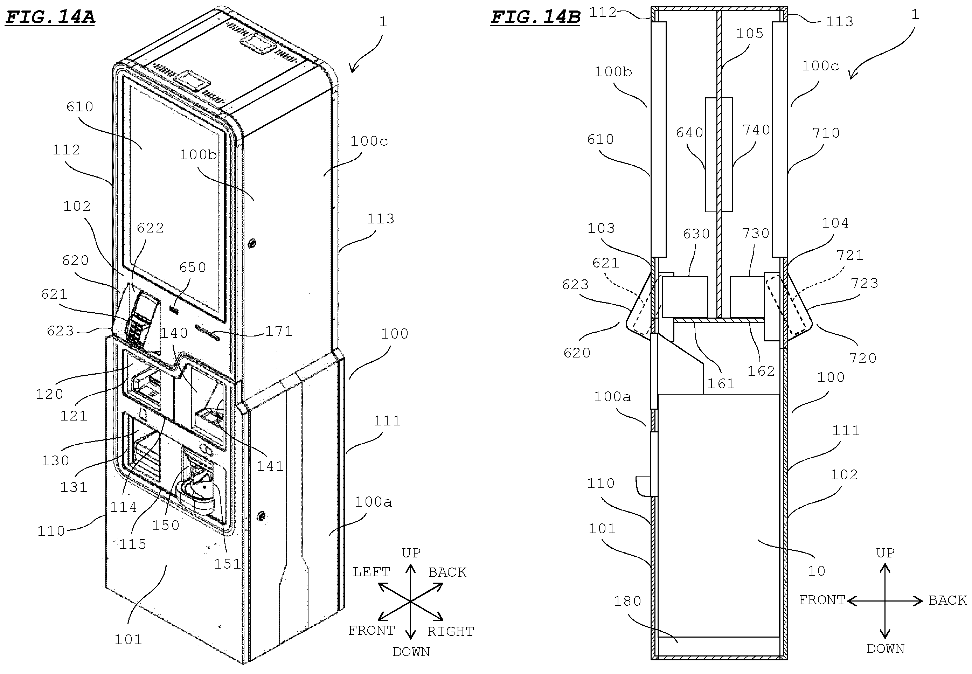

Furthermore, as shown in FIGS. 14A and 14B, the housing 100 may have a configuration in which the second housing 100b and the third housing 100c are connected in the front-back direction. In this case, the housing 100 has a substantially rectangular parallelepiped shape as a whole. The second housing 100b and the third housing 100c have a common back surface 105, the first control assembly 640 is installed on a surface on the second housing 100b side of the back surface 105, and the second control assembly 740 is installed on a surface on the third housing 100c side of the back surface 105.

Furthermore, the lower end of the banknote inlet 121 and the lower end of the coin inlet 141 may be shifted from each other in the up-down direction, and the upper end of the banknote outlet 131 and the upper end of the coin outlet 151 may be shifted from each other in the up-down direction. In addition, the center in the right-left direction of the banknote inlet portion 120 and the center in the right-left direction of the banknote outlet portion 130 may be shifted from each other.

Furthermore, the coin inlet 141 does not have to extend upward more than the banknote inlet 121. In addition, even if the coin inlet 141 extends upward more than the banknote inlet 121, the first operation device 620 does not have to overlap the coin inlet portion 140 when viewed in the right-left direction.

Furthermore, the dimension D1 in the up-down direction of the coin inlet 141 does not have to be made larger than the dimension D2 in the up-down direction of the banknote inlet 121.

Furthermore, the configuration of the banknote inlet portion 120, the banknote outlet portion 130, the coin inlet portion 140, and the coin outlet portion 150 is not limited to the configuration of the above embodiment. For example, the banknote inlet portion 120 does not have to be formed in a cavity shape and may be composed of an elongated substantially quadrangular banknote inlet portion into which banknotes are inserted, and the banknote outlet portion 130 does not have to be formed in a cavity shape and may be composed of an elongated substantially quadrangular banknote discharge port to which banknotes are discharged. For example, in the coin inlet portion 140, the coin reception portion 370 may protrude frontward from the first operation surface 101, and in the coin outlet portion 150, the coin reception portion 152 does not have to protrude frontward from the first operation surface 101. Furthermore, in the coin inlet portion 140, the coin reception portion 370 may have a passage having a shape different from that of the passage 372.

Furthermore, the power supply assembly 400, which supplies power to both the banknote handling assembly 200 and the coin handling assembly 300, may be placed at a position other than the space below the coin handling assembly 300. In addition, within the housing 100, two power supply assemblies that supply power to the banknote handling assembly 200 and the coin handling assembly 300, respectively, may be provided in the space below the coin handling assembly 300 or at other locations. Similarly, the control assembly 500 may also be placed at a position other than the space below the coin handling assembly 300.

Furthermore, the configuration of the banknote handling assembly 200 and the coin handling assembly 300 is not limited to the configuration of the above embodiment, and may be any configuration as long as a process of depositing/dispensing banknotes and coins can be performed.

Furthermore, by placing ticket issuing devices within the second housing 100b and within the third housing 100c and providing ticket issuing ports in the second operation surface 103 and the third operation surface 104, coupons (use tickets) for transaction targets may be issued from the ticket issuing ports when the transaction targets are ordered on the first display 610 and the second display 710. Moreover, the input of instructions for transactions is not limited to the input for ordering transaction targets.

Furthermore, the first operation device 620 does not have to be provided in the second operation surface 103. In this case, on the side having the first operation surface 101 and the second operation surface 103, only cash settlement can be performed, and electronic settlement cannot be performed.

Furthermore, instead of the banknote inlet portion 120 and the banknote outlet portion 130, a banknote inlet/outlet portion into and to which banknotes are inserted and discharged and which functions as a banknote inlet portion and a banknote outlet portion in the present invention may be provided in the first operation surface 101.

In addition to the above, the embodiment of the present invention can be modified as appropriate within the scope of the claims.

## Claims

1. An automatic transaction apparatus (1) comprising:
a money handling assembly (10a) configured to handle money including banknotes and coins;
a first display (610) above the money handling assembly (10a), the first display (610) facing a first direction and the first display (610) to display a first screen for input of a transaction instruction;
a second display (710) above the money handling assembly (10a), the second display (710) facing a second direction which is opposite the first direction, and the second display (710) to display a second screen for input of a transaction instruction; and
an operation device (720) that faces the second direction, the operation device (720) on which an operation for performing electronic settlement of a monetary amount corresponding to a transaction input to the second display (710) is performed.

2. The automatic transaction apparatus (1) according to claim 1, further comprising a housing (100), wherein
the money handling assembly (10a) is provided within the housing (100),
the housing (100) includes a first surface (101) facing the first direction,
the first surface (101) has a banknote inlet portion (120) into which banknotes are inserted, a banknote outlet portion (130) to which banknotes are discharged, a coin inlet portion (140) into which coins are inserted, and a coin outlet portion (150) to which coins are discharged, and
the first display (610) is provided above the first surface (101).

3. The automatic transaction apparatus (1) according to claim 2, wherein the money handling assembly (10a) counts an amount of money inserted into at least one of the banknote inlet portion (120) and the coin inlet portion (130), and discharges money to at least one of the banknote outlet portion (140) and the coin outlet portion (150) when there is a difference between the amount of the inserted money and a monetary amount corresponding to a transaction input to the first display (610).

4. The automatic transaction apparatus (1) according to claim 2 or 3, further comprising:
a first control circuit (640) configured to control the first display (610); and
a second control circuit (500) configured to control the money handling assembly (10a), wherein
the first control circuit (640) controls the first display (610) to display the first screen, and notifies the second control circuit (500) of an instruction of cash handling corresponding to an instructed transaction, in accordance with input to the first display (610), and
the second control circuit (500) controls the money handling assembly (10a) to count the amount of money inserted into at least one of the banknote inlet portion (120) and the coin inlet portion (140), and to perform a process of discharging money to at least one of the banknote outlet portion (130) and the coin outlet portion (150), when there is the difference between the amount of the inserted money and a monetary amount corresponding to a transaction input to the first display (610).

5. The automatic transaction apparatus (1) according to claim 4, wherein
when cash settlement is instructed by input to the first display (610),
the first control circuit (640) notifies the second control circuit (500) of the instruction of cash handling, in accordance with the transaction input to the first display (610), and
the second control circuit (500) controls the money handling assembly (10a) to execute the notified cash handling.

6. The automatic transaction apparatus (1) according to claim 4 or 5, further comprising a third control circuit (740) configured to control the second display (710) and the operation device (720), wherein
the third control circuit (740) controls the second display (710) to display the second screen, and when an instruction of a transaction is received via the second display (710), executes a process of performing electronic settlement of a monetary amount corresponding to the transaction, based on an operation on the operation device (720).

7. The automatic transaction apparatus (1) according to claim 4 to 6, further comprising another operation device (620) that faces the first direction and on which an operation for performing electronic settlement of a monetary amount corresponding to a transaction input to the first display (610) is performed, wherein
when electronic settlement is instructed by input to the first display (610), the first control circuit (640) executes a process of performing electronic settlement of a monetary amount corresponding to the inputted transaction, based on an operation on the another operation device (620).

8. The automatic transaction apparatus (1) according to claim 2 to 7, wherein
the housing (100) includes
a first housing (100a) including the first surface (101) and in which the money handling assembly (10a) is provided,
a second housing (100b) including a second surface (103) in which the first display (610) is provided, and
a third housing (100c) including a third surface (104) in which the second display (710) is provided,
a size of the second housing (100b) in a direction orthogonal to the second surface (103) and a size of the third housing (100c) in a direction orthogonal to the third surface (104) are smaller than a size of the first housing (100a) in a direction orthogonal to the first surface (101), and
the third housing (100c) is positioned on the first housing (100a) and is aligned with the second housing (100b).

9. The automatic transaction apparatus (1) according to claim 8, wherein the size of the second housing (100b) in the direction orthogonal to the second surface (103) and the size of the third housing (100c) in the direction orthogonal to the third surface (104) are equal to or smaller than half the size of the first housing (100a) in the direction orthogonal to the first surface (101).

10. The automatic transaction apparatus (1) according to claim 8 or 9, wherein the second housing (100b) is positioned on the first housing (100a) such that the second surface (103) is flush with the first surface (101) of the first housing (100a).

11. The automatic transaction apparatus (1) according to claim 8 to 10, wherein
the first housing (100a) further includes a fourth surface (102) that faces a direction opposite to the first surface (101), and
the third housing (100c) is positioned on the first housing (100a) such that the third surface (104) is flush with the fourth surface (102).

12. The automatic transaction apparatus (1) according to claim 2 to 11, wherein
the first display (610) is provided in a second surface (103) of the housing (100),
another operation device (620), on which an operation for performing electronic settlement of a monetary amount corresponding to a transaction input to the first display (610) is performed, is provided below the first display (610) in the second surface (103),
in a right-left direction of the automatic transaction apparatus (1), the right-left direction being perpendicular to the first direction, the banknote inlet portion (120) and the coin inlet portion (140) are aligned,
the banknote inlet portion (120) has a cavity shape and includes a banknote inlet (121) that is open in the first surface (101),
the coin inlet portion (140) has a cavity shape and includes a coin inlet (141) that is open in the first surface (101),
in an up-down direction of the automatic transaction apparatus (1), the up-down direction being perpendicular to the right-left direction and perpendicular to the first direction, the coin inlet (141) is larger than the banknote inlet (121) and the coin inlet (141) extends upward more than the banknote inlet (121),
the another operation device (620) overlaps the banknote inlet portion (120) in the up-down direction, and
the another operation device (620) overlaps the coin inlet portion (140) in the right-left direction.

13. The automatic transaction apparatus (1) according to claim 2 to 12, wherein
in a right-left direction of the automatic transaction apparatus (1), the right-left direction being perpendicular to the first direction:
the banknote inlet portion (120) and the coin inlet portion (140) overlap, and
the banknote outlet portion (130) and the coin outlet portion (150) overlap, and
in an up-down direction of the automatic transaction apparatus (1), the up-down direction being perpendicular to the right-left direction and perpendicular to the first direction:
the banknote inlet portion (120) and the banknote outlet portion (130) overlap, and
the coin inlet portion (140) and the coin outlet portion (150) overlap.

14. The automatic transaction apparatus (1) according to claim 2 to 13, wherein
the banknote inlet portion (120) has a cavity shape and includes a banknote inlet (121) that is open in the first surface (101),
the coin inlet portion (140) has a cavity shape, includes a coin inlet (141) that is open in the first surface (101), and includes a coin reception portion (370) that receives a plurality of coins, at a bottom portion thereof, and
in an up-down direction of the automatic transaction apparatus (1), the up-down direction being perpendicular to the first direction, the coin inlet (141) is larger than the banknote inlet (121).

15. The automatic transaction apparatus (1) according to claim 2 to 14, wherein
the coin inlet portion (140) has a cavity shape, includes a coin inlet (141) that is open in the first surface (101), and includes a coin reception portion (370) that receives a plurality of coins, at a bottom portion thereof,
in an interior (370a) of the coin reception portion (370), a taking-in port (371) for taking coins into the money handling assembly (10a) is provided at an end portion opposite to the coin inlet (141) side, and a passage (372) that has a sloping bottom surface sloping downward toward the taking-in port (371) side and in which coins flow toward the taking-in port (371) is provided, and
the passage (372) includes a first passage (373) that has an entrance width wider than a width of the taking-in port (371) and has a width gradually narrowing toward the taking-in port (371) side, and a second passage (374) that extends from an exit of the first passage (373) to the taking-in port (371).

16. The automatic transaction apparatus (1) according to claim 1 to 15, wherein
the money handling assembly (10a) includes a banknote handling assembly (200) configured to handle banknotes and a coin handling assembly (300) configured to handle coins, and
a power supply assembly (400) configured to supply power to both the banknote handling assembly (200) and the coin handling assembly (300) is provided within the housing (100).
